# EUROPEAN PATENT APPLICATION

(11) **EP 4 685 770 A1**
(43) Date of publication of application: **28.01.2026**
(21) Application number: 25191429.7
(22) Date of filing: 24.07.2025
(51) Int. Cl.: G08G 5/21, G08G 5/25, G08G 5/34, G08G 5/53, G08G 5/55, G08G 5/72

(54) **SYSTEMS AND METHODS FOR CREATING DIGITAL MAPS**

(30) Priority: 26.07.2024 US 202418785233
(71) Applicant: The Boeing Company, Arlington, VA 22202 (US)
(72) Inventor: CRAWFORD, Cole Newton, AUSTIN (US)
(74) Representative: Plasseraud IP

(57) **Abstract**

A system and a method (300) continuously receives (302) data at a first aircraft (402) from a second aircraft (404) while the first and second aircrafts are traveling. The data includes at least some positional information of the second aircraft. One or more anomalies in the data are identified (306) that are indicative of one or more geographic locations where a global positioning system (GPS) of the second aircraft was compromised. A digital map (500) is automatically created (308) that indicates the one or more geographic locations associated with the one or more anomalies that are identified in the data.

## Description

### FIELD OF THE DISCLOSURE

Examples of the present disclosure generally relate to systems and methods for creating real-time digital maps.

### BACKGROUND OF THE DISCLOSURE

At various times and at different locations during a flight of an aircraft, a global positioning system (GPS) of the aircraft may fail to operate properly. For example, the GPS may interfere with other wireless transmitting systems and/or devices, may be subject to jamming or spoofing, or the like. The aircraft may lose GPS navigation if the GPS is not operating properly, thereby leaving the pilot to operate the aircraft without the assistance of GPS.

Certain web-based platforms may be able to provide information associated with locations where GPS interference and/or jamming has occurred. However, in order for a pilot to access this data, the aircraft would need to have an internet connection, but many aircrafts are currently not equipped for such a connection. Furthermore, there is a time lag with which web-based platforms are able to identify or detect GPS issues. For example, a particular geographic location may not be identified as having interference or jamming issues at the time data was acquired, but has since experienced issues. Finally, the web-based platforms may not have data associated with an area in which the pilot is about to fly into if only certain flight data is available to the web-based platforms.

### SUMMARY OF THE DISCLOSURE

A need exists for a system and a method for creating real-time digital maps that indicate geographic locations where a global positioning system of an aircraft is expected to be compromised and/or malfunction prior to the aircraft reaching the identified geographic locations. The systems and methods may be non-web-based, such that the aircraft does not need to have an internet connection for identifying the geographic locations in which the GPS is expected to malfunction. A need exists for a real-time an alerting system to prepare a pilot of an aircraft for locations where a global positioning system of the aircraft may fail to operate properly.

With those needs in mind, certain examples of the present disclosure provide a method that continuously receives data at a first aircraft from a second aircraft while the first and second aircrafts are traveling. The data includes at least some positional information of the second aircraft. One or more anomalies in the data are identified that are indicative of one or more geographic locations where a global positioning system of the second aircraft was compromised. A digital map is automatically created that indicates the one or more geographic locations associated with the one or more anomalies that are identified in the data.

In at least one example, a notification may be communicated to an operator of the first aircraft responsive to the digital map being created. As another example, the data may be continuously received at the first aircraft via automatic dependent surveillance broadcasts (ADS-Bs) transmitted by the second aircraft. In at least one example, the digital map may indicate one or more other geographic locations where no anomalies were identified.

In at least one example, the method may include comparing the data with a baseline standard, and identifying the one or more anomalies responsive to a difference between the data and the baseline standard being outside of a determined threshold. In at least one example, the method may include determining that the digital map should remain unchanged responsive to the difference between the data and the baseline standard being within the determined threshold.

In at least one example, the digital map may include at least a portion of an upcoming flight path of the first aircraft. Optionally, the method may include indicating on the digital map one or more locations of the upcoming flight path of the first aircraft where a global positioning system of the first aircraft is expected to malfunction. In at least one example, the method may include changing at least a portion of the upcoming flight path of the first aircraft to avoid the one or more locations where the global positioning system of the first aircraft is expected to malfunction.

In at least one example, second data may be continuously received from a third aircraft, and one or more second anomalies in the second data may be identified. The second anomalies may indicate one or more geographic locations where a global positioning system of the third aircraft is compromised. The digital map may be automatically updated by changing at least a portion of the digital map responsive to the identification of the one or more second anomalies to indicate the one or more geographic locations associated with the one or more second anomalies that are identified in the second data. In at least one example, the one or more geographic locations associated with the anomalies in the data from the second aircraft are different than the one or more geographic locations associated with the anomalies in the second data from the third aircraft.

Certain examples of the present disclosure provide a method that includes continuously receiving data at a first aircraft from a first group of other aircrafts while the first aircrafts and the other aircrafts are traveling. The data may include at least some positional information of each of the other aircrafts of the first group. The data may be compared with a baseline standard, and one or more anomalies in the data may be identified responsive to a difference between the data and the baseline standard being outside of a determined threshold. The anomalies may be indicative of one or more geographic locations where a global positioning system of at least one of the other aircrafts of the first group was compromised. A digital map is automatically created that indicates the one or more geographic locations associated with the one or more anomalies that are identified in the data. The geographic locations may be indicative of one or more locations of an upcoming flight path of the first aircraft where a global positioning system of the first aircraft is expected to malfunction.

Certain examples of the present disclosure provide a non-transitory computer-readable storage medium comprising executable instructions that, in response to execution, cause one or more control units comprising one or more processors to perform operations that include continuously receives data at a first aircraft from a second aircraft while the first and second aircrafts are traveling. The data includes at least some positional information of the second aircraft. One or more anomalies in the data are identified that are indicative of one or more geographic locations where a global positioning system of the second aircraft was compromised. A digital map is automatically created that indicates the one or more geographic locations associated with the one or more anomalies that are identified in the data.

### BRIEF DESCRIPTION OF THE DRAWINGS

Figure 1 illustrates a front perspective view of an aircraft, according to an example of the present disclosure.
Figure 2 illustrates a schematic of a control unit of an aircraft, according to an example of the present disclosure.
Figure 3 illustrates a flow chart of a method, according to an example of the present disclosure.
Figure 4 illustrates a map of a flight path of a first aircraft, according to an example of the present disclosure.
Figure 5 illustrates a digital map, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Embodiments of the subject matter described herein may provide systems and methods for automatically identifying geographic locations where a global positioning system (GPS) of an aircraft is expected to be compromised. The geographic locations may be identified by using real-time data signals transmitted by other aircrafts. In one example, the signals may be transmitted as automatic dependent surveillance broadcasts (ADS-B). The signals that are transmitted by the other aircrafts may include one or more anomalies and/or discrepancies that may indicate geographic locations where the transmitting aircraft also experienced issues with their global positioning systems.

By identifying locations where the GPS may be compromised and/or malfunction in real-time, a pilot of the aircraft is able to prepare accordingly and prior to the aircraft reaching a location where the GPS is expected to be compromised. For example, the pilot may determine to change a portion of a flight path to avoid one or more of the compromised geographic locations. As another example, the pilot may be just made aware of a risk that the GPS may be compromised at an upcoming location, and the GPS may continue to be compromised and/or malfunction for an expected distance of travel, etc. For example, the digital maps may alert or provide a warning to the pilot ahead of the aircraft reaching a location where the GPS of the aircraft malfunctions.

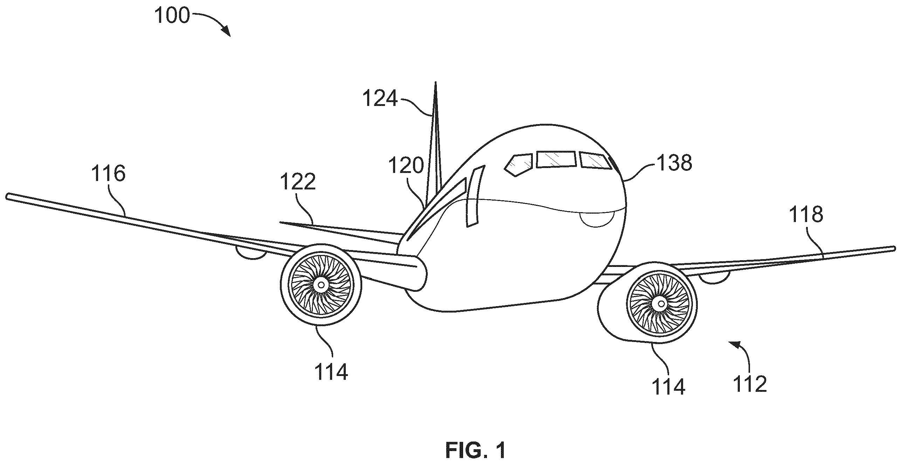

Figure 1 illustrates a perspective front view of an aircraft 100, according to an example of the present disclosure. The aircraft 100 includes a propulsion system 112 that includes engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124. The fuselage 118 of the aircraft 100 defines an internal cabin, which includes a flight deck or cockpit, one or more work sections (for example, galleys, personnel carry-on baggage areas, and the like), one or more passenger sections (for example, first class, business class, and coach sections), one or more lavatories, and/or the like. Figure 1 shows an example of an aircraft 100. It is to be understood that the aircraft 100 can be sized, shaped, and configured differently than shown in Figure 1.

Optionally, examples of the present disclosure can be used with various other types of vehicles such as drones, automobiles, trains, watercraft, spacecraft, or the like, that rely on global positioning systems to navigate along a path and/or that are in communication with one or more other vehicles.

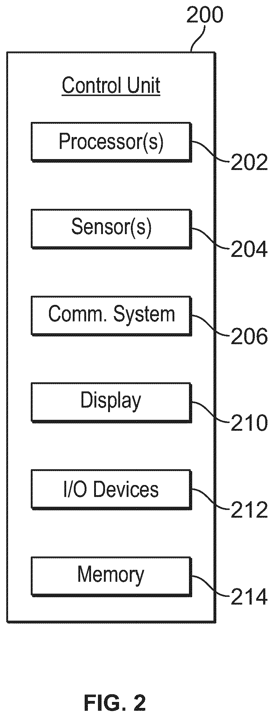

Figure 2 illustrates a schematic of a control unit 200 of the aircraft 100, according to an example of the present disclosure. The control unit 200 shown in Figure 2 is merely exemplary, and non-limiting.

The control unit 200 includes one or more processors 202 that can include and/or represent one or more electronic circuits that include and/or are connected to one or more logic-based devices, such as microprocessors, processors, controllers, or the like. Optionally, the processors 202 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 200 may be or include one or more processors that are configured to control operation, as described herein.

The control unit 200 and/or the aircraft 100 includes one or more sensors 204 that may be operably and/or communicatively coupled with the processors 202. The sensors 204 may sense or otherwise detect information. In one or more examples, the sensors may be and/or include cameras (e.g., cameras that capture still and/or video images), microphones, motion sensors, thermal sensors, vibrational sensors, pressure sensors, or the like. In at least one example, one or more of the sensors 204 may include and/or represent a global positioning system sensor, a radar sensor, or the like.

The control unit 200 of the aircraft 100 may be in communication with one or more other aircrafts, with an air-traffic controller, with an aircraft maintenance station, or the like, via a communication system 206. The communication system 206 may can include and/or represent one or more antennas, transceivers, radios, and/or the like, that enable wired and/or wireless communication between the systems of the control unit 200, between the control unit 200 and one or more other aircrafts, or the like. In at least one example, the control unit 200 may receive a flight plan of the aircraft 100, such as prior to the aircraft 100 embarking on a trip. In another example, the control unit may be in communication with an air-traffic controller before, during, and/or after the trip. For example, the air-traffic controller may communicate instructions for how the pilot should control operation of the aircraft, may communicate a flight path to the pilot, may communicate changes to the flight path, such as while the aircraft is in flight, or the like.

In at least one example, the communication system 206 may include a transceiving antenna(s) and/or device(s) that may transceive one or more signals, such as between the aircraft 100 and one or more other aircrafts, while the aircrafts are mid-flight. As one example, the communication system 206 may include one or more devices that may receive real-time automatic dependent surveillance-broadcast (ADS-B) signals, such as from another aircraft. The ADS-B signals may be continuously or substantially continuously transmitted by another aircraft, and may be continuously or substantially continuously received by the aircraft 100 while the aircraft 100 is mid-flight. In one or more examples, the ADS-B signals may be received at predetermined intervals of time (e.g., about every 10 minutes, about every 5 minutes, about every minute, about every 30 seconds, about every second, about every deci-second, about ever millisecond, or the like).

In at least one example, the ADS-B signals may be continuously received from other aircrafts that are within a determined range and/or within a determined distance from the aircraft 100. For example, the aircraft 100 may continuously receive ADS-B signals from other aircrafts that are within the determined range or distance of the aircraft 100, until a distance between the aircraft 100 and the other aircraft(s) exceeds the determined range or distance. As another example, the ADS-B signals may be continuously received from other aircrafts that are of the same type, classification, make, model, or the like, as the aircraft 100. As another example, the ADS-B signals may be continuously received from other aircrafts based on a flight path of the aircraft 100. For example, the aircraft 100 may receive the ADS-B signals from other aircrafts that are traveling or have traveled along flight paths that intersect with a flight path of the aircraft 100.

The control unit 200 includes a display 210 and one or more input/output devices 212 (shown at "I/O Devices" in Figure 2). In at least one example, the display 210 is an electronic device configured to electronically show images, videos, text, and/or the like. The display 210 can be a monitor, screen, television, touchscreen, and/or the like. The I/O device(s) 212 can include a keyboard, mouse, stylus, touchscreen interface (e.g., that is, the I/O device 212 can be integral with the display 210), and/or the like. The display 210 is configured to show visual graphics, videos, text, and/or the like.

A memory 214 may be in communication with the processors 202 of the control unit 200. The memory 214 stores instructions, received data, generated data, and/or the like. In one example, the control unit 200 may access and/or retrieve data associated with the aircraft 100 from the memory. In at least one example, the control unit 200 may be configured to execute a set of instructions that are stored in one or more of the memory 214 or one or more other data storage units or elements in order to process data. The memory 214 may also store data or other information as desired or needed. The memory may be in the form of an information source or a physical memory element within a processing machine.

In at least one example, the set of instructions may include various commands that instruct the control unit 200 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

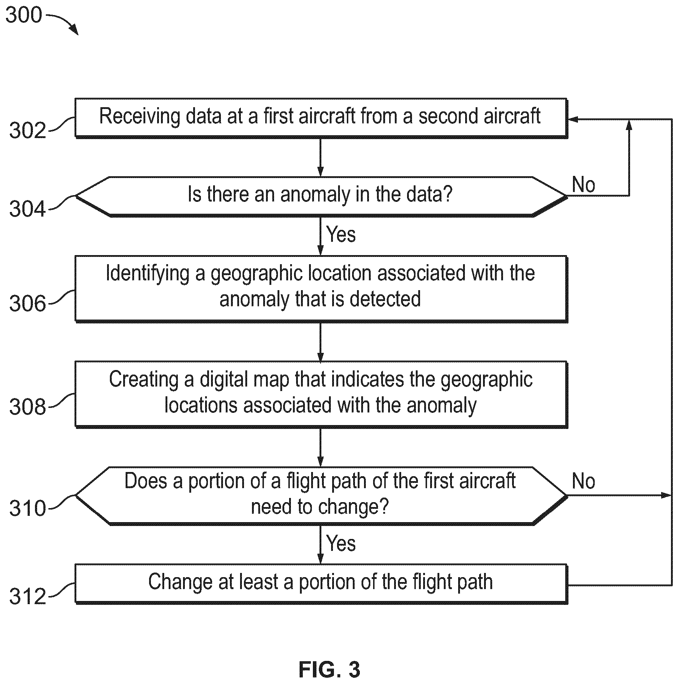

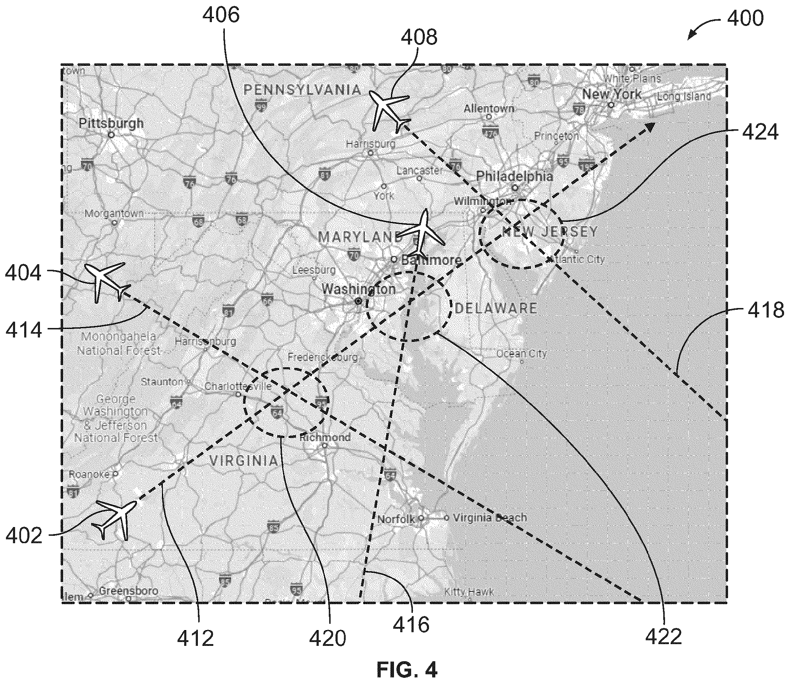

Figure 3 illustrates a flow chart 300 of a method, according to an example of the present disclosure. At 302, data is continuously received at a first aircraft from one or more other aircrafts, such as a second aircraft. Figure 4 illustrates a map 400 of a first flight path 412 of a first aircraft 402, according to an example of the present disclosure. The map 400 shown in Figure 4 is exemplary, and is non-limiting.

In at least one example, the map 400 may be displayed to the pilot of the first aircraft 402, such as via the display 210. **In** the illustrated example, the first aircraft 402 is expected to travel along the first flight path 412. Also illustrated on the map 400 are a second aircraft 404 that has traveled along a second flight path 414, a third aircraft 406 that has traveled along a third flight path 416, and a fourth aircraft 408 that has traveled along a fourth flight path 418. The first flight path 412 of the first aircraft 402 is expected to intersect with the second flight path 414 of the second aircraft 404 at a first intersection 420; is expected to intersect with the third flight path 416 of the third aircraft 406 at a second intersection 422; and is expected to intersect with the fourth flight path 418 of the fourth aircraft 408 at a third intersection 424.

**In** at least one example, the first aircraft 402 may continuously receive data from the second, third, and fourth aircrafts based on the first flight path 412 expecting to intersect with the second, third, and fourth flight paths 414, 416, 418, respectively. As another example, the first aircraft 402 may continuously receive data from one or more of the second, third, or fourth aircrafts based on the first, second, third, and fourth aircrafts being within a threshold distance or range of each other. According to the illustrated example of Figure 4, the first aircraft 402 may receive data from the second, third, and fourth aircrafts, respectively. **In** one or more examples, the first aircraft 402 may continuously receive data from any number of other aircrafts, such as hundreds of aircrafts, thousands of aircrafts, hundreds of thousands of aircrafts, or the like.

The data may be continuously received or substantially continuously received by the first aircraft as ADS-B signals that are communicated by the second, third, and fourth aircrafts 414, 416, 418. **In** at least one example, the data received as ADS-B signals may include at least some positional information of each of the aircrafts from which the data is received. The data received by the first aircraft 402 may be examined, compared, manipulated, or the like, such as by the control unit 200 of the first aircraft 402. Returning to Figure 3, at 304, a determination is made if there is an anomaly, discrepancy, issue, or the like, that is identified in the data. The control unit 200 may examine the data received from the other aircrafts, and may determine if there are any anomalies with the data. As one example, the control unit 200 may identify an anomaly in the data based on a comparison between the data with a baseline standard, which may be stored in the memory 214. For example, the control unit 200 may compare the received data with a baseline standard, and determine that there is an anomaly with the data based on a difference between the data and the baseline standard being outside of a determined threshold. Alternatively, if the difference between the data and the baseline standard is not outside of the determined threshold, the control unit 200 may determine that no anomaly (or an anomaly that does not exceed the determined threshold) is present in the data.

As another example, the control unit 200 may examine the received data, and may determine that there is an anomaly with the data based on a difference between a first data point and a second data point received from another aircraft exceeding a threshold. For example, the data associated with the ADS-B signal received at a first time increment may differ from the data associated with the ADS-B signal received at a second time increment or other time increment that is subsequent to the first time increment by a determined threshold, thereby indicating an anomaly. Alternatively, if the difference between the data of the first time increment and the data of the second time increment is not outside of the determined threshold, the control unit 200 may determine that no anomaly (or an anomaly that does not exceed the determined threshold) is present in the data.

If no anomaly in the data is identified, then flow of the method returns to 302, and the method may continue, such as until the first aircraft 402 lands, reaches a target geographic location, or the like. Alternatively, if one or more anomalies are identified, flow of the method proceeds toward 306.

At 306, a geographic location associated with the anomaly is identified and/or determined. For example, the ADS-B signals that are continuously received include at least some positional information associated with the aircraft(s) that transmitted the ADS-B signals. The control unit 200 may examine or otherwise manipulate the data to identify the geographic location(s) of the transmitting aircraft(s) at the time when the transmitting aircraft(s) transmitted the ADS-B signal that included the anomaly.

In at least one example, the anomaly identified by the control unit 200 may be indicative of one or more geographic locations where a global positioning system (GPS) of the aircraft transmitting the ADS-B signal was compromised, malfunctioning, functioning at a level or standard that is less than or lower than a threshold standard, or the like. In one example, the GPS of the transmitting aircraft may be or may have been compromised (e.g., at the geographic location associated with the anomaly) responsive to interference between the GPS and other wireless transceiving devices, responsive to the GPS of the transmitting aircraft jamming, spoofing, or the like.

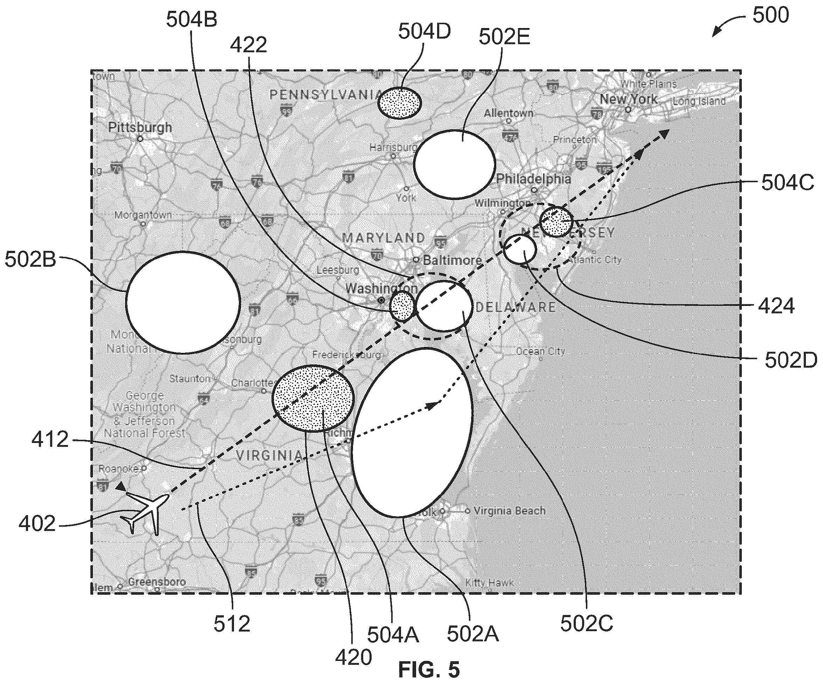

At 308, the control unit 200 may automatically create a digital map that indicates the geographic locations associated with the one or more anomalies that have been identified. For example, Figure 5 illustrates a digital map 500, according to an example of the present disclosure. The control unit 200 may automatically create the digital map 500 to display to the pilot of the first aircraft 402 one or more geographic locations where anomalies were detected in data from other aircrafts and/or geographic locations where no anomalies (or anomalies that were less than or did not exceed a designated threshold) were detected. For example, the digital map 500 illustrates the first aircraft 402 and the upcoming or approaching first flight path 412 that the first aircraft 402 is expected to travel. The digital map 500 also includes the first, second, and third intersections 420, 422, 424 where the first flight path 412 is expected to intersect with the second, third, and fourth flight paths of the second, third, and fourth aircrafts shown in Figure 4.

In the illustrated example, the digital map 500 includes clear areas 502A-E indicating where no anomalies were detected in data received from the second, third, and/or fourth aircrafts 404, 406, 408, respectively. The digital map 500 also includes compromising areas 504A-D indicating where anomalies were detected in the data received from the second, third, and/or fourth aircrafts 404, 406, 408, respectively.

For example, the ADS-B signals transmitted by the second aircraft 404 that traveled along the second flight path 414 may indicate a first clear area 502A and a second clear area 502B, and a first compromised area 504A, wherein the first comprised area 504A is within the first intersection 420. The ADS-B signals transmitted by the third aircraft 406 that traveled along the third flight path 416 may indicate a third clear area 502C and a second compromised area 504B, wherein both of the third clear area 502C and the second compromised area 504B are within the second intersection 422. The ADS-B signals transmitted by the fourth aircraft 408 that traveled along the fourth flight path 418 may indicate a fourth clear area 502D and a third compromised area 504C that are within the third intersection 424, and a fifth clear area 502E and a fourth compromised area 504D that are outside of the third intersection 424.

**In** at least one example, the signals that are continuously submitted by the second, third, and/or fourth aircrafts, and continuously received by the first aircraft 402 may provide a real-time indication of locations where global positioning systems may not operate correctly, and locations where global positioning systems may be expected to operate correctly. For example, the compromising areas 504A-D may indicate to the pilot of the first aircraft 402 locations where a global positioning system of the first aircraft may malfunction, may jam, may spoof, or may otherwise fail to operate properly.

In one or more examples, a notification may be communicated to the pilot of the first aircraft 402 responsive to the control unit creating the digital map 500. For example, the notification may be an audio notification and/or a visual notification that may be communicated via the display 210 and/or another I/O device 212. **In** at least one example, a notification may be communicated every time a digital map is created, and/or every time the digital map is updated, changed, revised, or the like. For example, the control unit 200 may automatically continuously monitor the ADS-B signals that are received from other aircrafts, and may automatically continuously determine if the digital map 500 should be updated or remain unchanged based on the continuous reception and examination of data signals.

In at least one example, the control unit 200 may identify an anomaly in the data received from the second aircraft 404 associated with a first geographic location. The control unit 200 may also identify an anomaly in the data received from the third aircraft 406 associated with the same first geographic location in which the anomaly of the data of the second aircraft 404 was located. In one or more examples, the data of the second aircraft 404 may include an anomaly at the first geographic location but the data of the third aircraft 406 may not include an anomaly at the first geographic location. The control unit 200 may identify the discrepancy between the data of the second aircraft 404 and the data of the third aircraft 406. In at least one example, the control unit 200 may identify the first geographic location as being a compromised area responsive to at least one anomaly being identified between the two different aircrafts.

In one or more examples, the second, third, and fourth aircrafts 404, 406, 408 may be included and/or associated with a first group of aircrafts from which the first aircraft 402 continuously receives ADS-B signals including positional data. In at least one example, the first aircraft 402 may receive ADS-B signals from another group of aircrafts, such as responsive to the first aircraft 402 moving closer to the second group of aircrafts, moving away from the first group of aircrafts, or the like. In at least one example,

Returning to Figure 3, at 310 a determination is made if a portion of the first flight path 412 of the first aircraft 402 should change, such as based on the geographic locations of the compromised areas 504 relative to the first flight path 412. As one example, the control unit 200 may make the determination if a portion of the first flight path should change. As another example, the pilot of the first aircraft 402 may manually make the decision to change a portion of the flight path. As another example, an operator of an air-traffic controller may receive the digital map, and may make the decision to change a portion of the first flight path based on the locations of the compromised areas 504.

If it is determined that a portion of the first flight path does not need to change, then flow of the method returns to 302, and the control unit 200 may continue to receive data, such as for the entirety of the flight of the first aircraft 402, until the first aircraft 402 reaches a determined geographic location, until the first aircraft 402 is grounded, or the like.

Alternatively, if a portion of the first flight path needs to change, flow of the method proceeds toward 312. At 312, one or more portions of the first flight path 412 may be changed. The one or more portions of the first flight path 412 that may be changed may be based on the portion(s) of the flight path in which the first aircraft 402 is expected to travel through one or more of the compromised areas 504A-D. In the illustrated example shown in Figure 5, the first flight path 412 is changed to a revised flight path 512. The first aircraft 402 is expected to avoid the first, second, and third compromised areas 504A-C while traveling along the revised flight path 512.

The diagrams of examples herein may illustrate one or more control or processing units, such as the control unit 200. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control system 100 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

Referring to Figures 1-5, examples of the subject disclosure provide systems and methods that allow large amounts of data to be quickly and efficiently analyzed by a computing device. For example, the control unit 200 can receive and/or analyze various aspects of maps, charts, aerial images, geographic regions, and the like. The control unit 200 can receive and analyze hundreds, thousands, or more sets of data over days, weeks, months, or years from thousands of aircrafts. As such, large amounts of data, which may not be discernable by human beings, are being tracked and analyzed. The vast amounts of data are efficiently organized and/or analyzed by the control unit 200, as described herein. The control unit 200 analyzes the data in a relatively short time in order to quickly and efficiently determine geographic locations of compromised areas and/or geographic locations of clear areas in order to create a digital map. A human being would be incapable of efficiently analyzing such vast amounts of data in such a short time. As such, examples of the present disclosure provide increased and efficient functionality, and vastly superior performance in relation to a human being reviewing and/or analyzing the vast amounts of data.

In at least one example, all or part of the systems and methods described herein may be or otherwise include an artificial intelligence (AI) or machine-learning system that can automatically perform the operations of the methods also described herein. For example, the control unit 200 can be an artificial intelligence or machine learning system. These types of systems may be trained from outside information and/or self-trained to repeatedly improve the accuracy with how data is analyzed. Over time, these systems can improve by determining such information with increasing accuracy and speed, thereby significantly reducing the likelihood of any potential errors. For example, the AI or machine-learning systems can learn and identify characteristics of data to improve an efficiency of analyzing and/or identifying anomalies in the data in order to create and/or update digital maps. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determination of locations of actual intersections. The training minimizes conflicts and interference by performing an iterative training algorithm, in which the systems are retrained with an updated set of data (for example, data received before, during, and/or after each time digital map is updated, released, or the like) and based on the feedback examined prior to the most recent training of the systems. This provides a robust analysis model that can better determine situational information in a cost effective and efficient manner.

In at least one example, the control unit 200 automatically performs the steps 302-312 of the flow chart 300 without human intervention. For example, the control unit 200 automatically receives and examines data from other aircrafts, identifies anomalies in the data, and creates and pushes or communicates the digital map to an operator, to the memory 214, to a remote location (e.g., another control system, an air-traffic controller, another aircraft, or the like), or the like.

Further, the disclosure comprises examples according to the following clauses:
Clause 1: a method, comprising:
   continuously receiving data at a first aircraft from a second aircraft while the first aircraft and the second aircraft are traveling, the data including at least some positional information of the second aircraft;
   identifying one or more anomalies in the data, the one or more anomalies indicative of one or more geographic locations where a global positioning system of the second aircraft was compromised;
   automatically creating a digital map that indicates the one or more geographic locations associated with the one or more anomalies that are identified in the data.
Clause 2: the method of claim 1, further comprising communicating a notification to an operator of the first aircraft responsive to automatically creating the digital map.
Clause 3: the method of clauses 1 or 2, further comprising continuously receiving the data at the first aircraft via automatic dependent surveillance broadcasts transmitted by the second aircraft.
Clause 4: the method of any of clauses 1-3, wherein the digital map indicates one or more other geographic locations where no anomalies were identified in the data.
Clause 5: the method of any of clauses 1-4, further comprising:
   comparing the data with a baseline standard; and
   identifying the one or more anomalies responsive to a difference between the data and the baseline standard being outside of a determined threshold.
Clause 6: the method of clause 5, further comprising determining that the digital map should remain unchanged responsive to the difference between the data and the baseline standard being within the determined threshold.
Clause 7: the method of any of clauses 1-6, wherein the digital map is configured to include at least a portion of an upcoming flight path of the first aircraft.
Clause 8: the method of clause 7, further comprising indicating on the digital map one or more locations of the upcoming flight path of the first aircraft where a global positioning system of the first aircraft is expected to malfunction.
Clause 9: the method of clause 8, further comprising changing at least a portion of the upcoming flight path of the first aircraft to avoid the one or more locations where the global positioning system of the first aircraft is expected to malfunction.
Clause 10: the method of any of clauses 1-9, further comprising:
   continuously receiving second data from a third aircraft;
   identifying one or more second anomalies in the second data, the one or more second anomalies indicative of one or more geographic locations where a global positioning system of the third aircraft is compromised; and
   automatically updating the digital map by changing at least a portion of the digital map responsive to the identification of the one or more second anomalies to indicate the one or more geographic locations associated with the one or more second anomalies that are identified in the second data.
Clause 11: the method of clause 10, wherein the one or more geographic locations associated with the one or more anomalies in the data from the second aircraft are different than the one or more geographic locations associated with the one or more second anomalies in the second data from the third aircraft.
Clause 12: a method, comprising:
   continuously receiving data at a first aircraft from a first group of other aircrafts while the first aircraft and the other aircrafts are traveling, the data including at least some positional information of each of the other aircrafts of the first group;
   comparing the data with a baseline standard and identifying one or more anomalies in the data responsive to a difference between the data and the baseline standard being outside of a determined threshold, the one or more anomalies indicative of one or more geographic locations where a global positioning system of at least one of the other aircrafts of the first group was compromised;
   automatically creating a digital map that indicates the one or more geographic locations associated with the one or more anomalies that are identified in the data, the one or more geographic locations indicative of one or more locations of an upcoming flight path of the first aircraft where a global positioning system of the first aircraft is expected to malfunction.
Clause 13: the method of clause 12, further comprising continuously receiving the data at the first aircraft via automatic dependent surveillance broadcasts transmitted by each of the other aircrafts of the first group.
Clause 14: the method of clauses 12 or 13, wherein the digital map indicates one or more other geographic locations where no anomalies were identified in the data.
Clause 15: the method of any of clauses 12-14, further comprising communicating a notification to an operator of the first aircraft responsive to automatically creating the digital map.
Clause 16: the method of any of clauses 12-15, further comprising changing at least a portion of the upcoming flight path of the first aircraft to avoid the one or more locations where the global positioning system of the first aircraft is expected to malfunction.
Clause 17: the method of any of clauses 12-15, further comprising:
   continuously receiving second data from a second group of aircrafts;
   identifying one or more second anomalies in the second data, the one or more second anomalies indicative of one or more geographic locations where a global positioning system of at least one of the other aircrafts of the second group was compromised; and
   automatically updating the digital map by changing at least a portion of the digital map responsive to the identification of the one or more second anomalies to indicate the one or more geographic locations associated with the one or more second anomalies that are identified in the second data.
Clause 18: the method of clause 17, wherein the one or more geographic locations associated with the one or more anomalies in the data from the first group of aircrafts are different than the one or more geographic locations associated with the one or more second anomalies in the second data from the second group of aircrafts.
Clause 19: a non-transitory computer-readable storage medium comprising executable instructions that, in response to execution, cause one or more control units comprising one or more processors to perform the operations comprising:
   continuously receiving data at a first aircraft from a second aircraft while the first aircraft and the second aircraft are traveling, the data including at least some positional information of the second aircraft;
   identifying one or more anomalies in the data, the one or more anomalies indicative of one or more geographic locations where a global positioning system of the second aircraft was compromised;
   automatically creating a digital map that indicates the one or more geographic locations associated with the one or more anomalies that are identified in the data.
Clause 20: the non-transitory computer-readable storage medium of claim 19, further configured to perform the operations comprising:
   continuously receiving second data from a third aircraft;
   identifying one or more second anomalies in the second data, the one or more second anomalies indicative of one or more geographic locations where a global positioning system of the third aircraft is compromised; and
   automatically updating the digital map by changing at least a portion of the digital map responsive to the identification of the one or more second anomalies to indicate the one or more geographic locations associated with the one or more second anomalies that are identified in the second data.

As described herein, examples of the present disclosure provide systems and methods for automatically identifying geographic locations where a global positioning system is expected to be compromised using real-time data signals transmitted by other aircrafts. By identifying locations where the GPS may be compromised and/or malfunction in real-time, an operator of the aircraft is able to prepare accordingly, whether in changing a portion of a flight path to avoid one or more of the compromised geographic locations, to understand that the GPS may be compromised at an upcoming location for an expected distance of travel, etc.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method (300), comprising:
continuously receiving (302) data at a first aircraft (402) from a second aircraft (404) while the first aircraft and the second aircraft are traveling, the data including at least some positional information of the second aircraft;
identifying (306) one or more anomalies in the data, the one or more anomalies indicative of one or more geographic locations where a global positioning system (GPS) of the second aircraft (404) was compromised;
automatically creating (308) a digital map (500) that indicates the one or more geographic locations associated with the one or more anomalies that are identified in the data.

2. The method (300) of claim 1, further comprising communicating a notification to an operator of the first aircraft (402) responsive to automatically creating the digital map (500).

3. The method (300) of any one of preceding claims, further comprising continuously receiving the data at the first aircraft (402) via automatic dependent surveillance broadcasts (ADS-B) transmitted by the second aircraft (404).

4. The method (300) of any one of preceding claims, wherein the digital map (500) indicates one or more other geographic locations where no anomalies were identified in the data.

5. The method (300) of any one of preceding claims, further comprising:
comparing the data with a baseline standard; and
identifying (306) the one or more anomalies responsive to a difference between the data and the baseline standard being outside of a determined threshold.

6. The method (300) of claim 5, further comprising determining that the digital map (500) should remain unchanged responsive to the difference between the data and the baseline standard being within the determined threshold.

7. The method (300) of any one of preceding claims, wherein the digital map (500) is configured to include at least a portion of an upcoming flight path of the first aircraft (402).

8. The method (300) of claim 7, further comprising indicating on the digital map (500) one or more locations of the upcoming flight path of the first aircraft (402) where a global positioning system (GPS) of the first aircraft (402) is expected to malfunction.

9. The method (300) of claim 8, further comprising changing at least a portion of the upcoming flight path of the first aircraft (402) to avoid the one or more locations where the global positioning system (GPS) of the first aircraft (402) is expected to malfunction.

10. The method (300) of any one of preceding claims, further comprising:
continuously receiving (302) second data from a third aircraft (406);
identifying (306) one or more second anomalies in the second data, the one or more second anomalies indicative of one or more geographic locations where a global positioning system (GPS) of the third aircraft (406) is compromised; and
automatically updating the digital map (500) by changing at least a portion of the digital map responsive to the identification of the one or more second anomalies to indicate the one or more geographic locations associated with the one or more second anomalies that are identified in the second data.

11. The method (300) of claim 10, wherein the one or more geographic locations associated with the one or more anomalies in the data from the second aircraft (404) are different than the one or more geographic locations associated with the one or more second anomalies in the second data from the third aircraft (406).

12. The method (300) of any one of preceding claims, wherein the second aircraft (404) belongs to a first group of other aircrafts, and comprising:
continuously receiving (302) data at the first aircraft (402) from the first group of other aircrafts while the first aircraft (402) and the other aircrafts are traveling, the data including at least some positional information of each of the other aircrafts of the first group;
comparing the data with a baseline standard and identifying (306) one or more anomalies in the data responsive to a difference between the data and the baseline standard being outside of a determined threshold, the one or more anomalies indicative of one or more geographic locations where a global positioning system (GPS) of at least one of the other aircrafts of the first group was compromised;
automatically creating (308) a digital map (500) that indicates the one or more geographic locations associated with the one or more anomalies that are identified in the data, the one or more geographic locations indicative of one or more locations of an upcoming flight path of the first aircraft (402) where a global positioning system (GPS) of the first aircraft (402) is expected to malfunction.

13. The method (300) of claim 10, further comprising:
continuously receiving (302) second data from a second group of aircrafts;
identifying (306) one or more second anomalies in the second data, the one or more second anomalies indicative of one or more geographic locations where a global positioning system (GPS) of at least one of the other aircrafts of the second group was compromised; and
automatically updating the digital map (500) by changing at least a portion of the digital map responsive to the identification of the one or more second anomalies to indicate the one or more geographic locations associated with the one or more second anomalies that are identified in the second data.

14. The method (300) of claim 13, wherein the one or more geographic locations associated with the one or more anomalies in the data from the first group of aircrafts are different than the one or more geographic locations associated with the one or more second anomalies in the second data from the second group of aircrafts.

15. A non-transitory computer-readable storage medium comprising executable instructions that, in response to execution, cause one or more control units (200) comprising one or more processors (202) to perform the operations comprising:
continuously receiving (302) data at a first aircraft (402) from a second aircraft (404) while the first aircraft (402) and the second aircraft (404) are traveling, the data including at least some positional information of the second aircraft (404);
identifying (306) one or more anomalies in the data, the one or more anomalies indicative of one or more geographic locations where a global positioning system (GPS) of the second aircraft (404) was compromised;
automatically creating (308) a digital map (500) that indicates the one or more geographic locations associated with the one or more anomalies that are identified in the data.
